# EUROPEAN PATENT SPECIFICATION

(11) **EP 4 500 620 B1**
(45) Date of publication and mention of the grant of the patent: **24.06.2026**
(21) Application number: 23714689.9
(22) Date of filing: 24.03.2023
(51) Int. Cl.: H01M 10/0562, H01M 50/403, H01M 10/052, H01M 50/414, H01M 50/431, H01M 50/443, H01M 50/446

(54) **METHOD OF MANUFACTURING A HYBRID INORGANIC-POLYMERIC MEMBRANE**
VERFAHREN ZUR HERSTELLUNG EINER HYBRIDEN ANORGANISCH-POLYMEREN MEMBRAN
PROCÉDÉ DE FABRICATION D'UNE MEMBRANE HYBRIDE INORGANIQUE-POLYMÈRE

(30) Priority: 25.03.2022 EP 22382278
(43) Date of publication of application: 05.02.2025
(73) Proprietor: Fundación Centro de Investigación Cooperativa de Energías Alternativas, CIC Energigune Fundazioa, 01510 Vitoria-Gasteiz, Álava (ES)
(72) Inventor: VILLAVERDE OREJÓN, Aitor, 01510 Vitoria-Gasteiz, Álava (ES); OTAEGUI AMEZTEGUI, Laida, 01510 Vitoria-Gasteiz, Álava (ES); MORANT MIÑANA, Maria Carmen, 01510 Vitoria-Gasteiz, Álava (ES); BLANCO MOLINA, June, 01510 Vitoria-Gasteiz, Álava (ES)
(74) Representative: ABG Intellectual Property Law, S.L.
(86) International application number: PCT/EP2023/057596
(87) International publication number: WO 2023/180510

(56) References cited:
- US-A- 5 622 792
- US-A1- 2007 273 062
- US-A1- 2012 202 114

## Description

### FIELD OF THE INVENTION

The invention relates to a method for producing a hybrid polymer membrane, mainly directed to its use as hybrid polymer electrolyte (HPE), by direct introduction of the individual components of the membrane into a twin screw extrusion with no need for any sort of pre-processing of said components. Therefore the present invention is concerned with a solvent-free, scalable and time-saving process for the manufacturing of a hybrid polymer membrane at reduced operational costs.

### BACKGROUND

Electrochemical rechargeable batteries consist of two electrodes, the cathode and the anode, separated by an electrolyte and a separator. Functional separators may contribute to address issues related to the efficiency of lithium metal batteries such as dendritic growths, high reactivity of Li-metal, low coulombic efficiency, and safety hazards.

Most commercial separators are porous materials fabricated using polyolefin polymers such as polyethylene (PE) and polypropylene (PP). Hybrid inorganic-polymeric separators which combine a conductive polymeric electrolyte along with an inorganic filler are also reported. An ideal separator: (1) provides migration paths for ions but prevents electrons from flowing directly through the electrolyte (a high affinity or wettability between the separator and electrolyte provides facile ion conduction), (2) physically prevents direct contact between a cathode and an anode, which reduces the risk of short circuits or explosions and (3) should be sufficiently thin to enable the battery to achieve short ion migration paths and high volumetric energy density.

The most common manufacturing process of a hybrid membrane involves casting with solvents (e.g.: US20040151985A1 or US8268197B2). Despite some advantages such as the structural control on the final electrolyte, this strategy usually implies the use of toxic solvents that subsequently require at least an additional drying step. Thus, solvent-free manufacturing routes to hybrid electrolytes are becoming more desirable.

The combination of extrusion and hot pressing steps is a notable solvent-free alternative. In this case, as a result of the extrusion process, a rod is obtained that is hot-pressed to obtain a film.

For example, F. González et al. (Polymers 2018, 10, 124, doi:10.3390/polym10020124) report thermoplastic polymer electrolytes employing polyethylene oxide (PEO) as a polymer matrix, bis(trifluoromethane sulfonimide) (LiTFSI) as a conductive salt, and different room-temperature ionic liquids (RTIL) with bis(fluorosulfonyl)imide (FSI) or TFSI anions, using modified sepiolite as a physical cross-linker of PEO. The polymer electrolyte was prepared by melt-compounding the components into an extruder after a premixing step involving the ionic liquid, LiTFSI salt and modified sepiolite under magnetic stirring. Films with controlled thickness (~500 and 1000 µm) were obtained in a non-continuous manner by compression molding posterior to the extrusion step.

In another report from the same authors, F. González et al. (Journal of The Electrochemical Society, 2020, 167, 070519, doi: 10.1149/1945-7111/ab6bc1) disclose thermoplastic solid state electrolytes based on PEO, the ionic liquid 1-butyl-1-methylpyrrolidinium bis(trifluoromethanesulfonyl)imide (PYR14TFSI), LiTFSI and two inorganic fillers with different morphology and nature, namely a modified sepiolite (TPGS-S) and garnet-type filler (Li₇La₃Zr_{1.75}Nb_{0.25}O₁₂ or LLZNO), prepared via a solvent-free extrusion method. As in the previous work, the components were manually pre-mixed prior to their introduction into the extruder and then melt-compounded into the extruder. Later on, films with thickness comprised between ~500 and 1000 µm were obtained by compression molding and electrochemically characterized.

H. Graebe et al. (ECS Transactions, 77 (11), 393-401, 2017, doi: 10.1149/07711.0393ecst) disclose a solvent-free preparation technique of PEO/LiTFSI electrolytes and LFP-based cathodes (LFP: lithium iron phosphate). The electrolyte preparation process was carried out in an argon-filled glovebox with controlled air and water content. After weighing the right proportions, the powders were mixed by using a dual asymmetric centrifugal mixer, which allows a rapid homogenization of the powders. It has to be noted that PEO and SiO₂ were first mixed, then LiTFSI was added and the mixture was stirred at reduced speed. To form a film of solid-polymer electrolyte (SPE) the appropriate amount of mixed powder was filled into a pressing die (diameter 16 mm) and pressed at 73 kN/cm² for a few seconds. It is stated in the article that "The mixing step is the most essential part in the process chain to achieve a free-flowing powder, which is the key for further process steps", indicating that not only the order by which the components are mixed matters, but the pre-mixing step itself is crucial.

The above-mentioned prior art is based on a non-continuous two-step process which, from an industrial point of view, is not very appealing.

Manufacturing processes of hybrid membranes that consist of an extrusion and a calendering step in a continuous or discontinuous manner are also known, even though they also involve an initial pre-processing step such as pre-mixing with stirring, granulation, desagglomeration, milling, shaker mixing, etc.

An example of an extrusion process followed by calendering is disclosed by E. Wiegmann et al. (Advances in Industrial and Manufacturing Engineering 3 (2021) 100065, doi: 10.1016/j.aime.2021.100065), who developed a solvent-free route to SPE films based on a PEO-based block copolymer through a scalable film casting process. A polybutylene terephthalate - polyethylene oxide (PBE-PEO) block copolymer and the conducting lithium salt LiTFSI were used. A homogeneous distribution of the polymer and lithium salt was obtained within the SPE mixture by granulation. A ploughshare mixer was used at 20 °C for 15 min with a slow runner speed of 75 rpm and a chopper speed of 1125 rpm. The granulated SPE mixture was further processed by extrusion in a twin-screw extruder and the target separator was obtained with a thickness of 30 µm after a final calendering step.

Another example of solvent-free production of polymeric electrolyte-based all-solid-state battery electrodes via pre-treatment of the electrolyte components was provided by L. Helmers et al. (Energy Technol. 2021, 9, 2000923, doi: 10.1002/ente.202000923). In this document, two scalable and sustainable production chains are presented involving extrusion and direct calendaring of composite cathode granules. Both process routes start with a melt granulation step to desagglomerate the carbon black and homogenize the cathode components. By adjusting the granulation process parameters, the process time and, thus, the production costs can be reduced. This work further highlights the importance of order of addition of the components into the extruder for a successful production of the PEO-based electrolyte as the direct contact between PEO and LiTFSI in the mixer can be inhibited by contacting PEO and carbon black in the first place. Carbon black would, in fact, cover the surface of PEO and, hereby, impede a change in the structure.

Other patent documents disclose preparation methods of various mixed organic-inorganic electrolytes for electrochemical applications, though the methods may comprise more than one pre-processing step of the starting materials which again increases time and costs of the manufacturing.

CN106450394A teaches a method for preparing a PVDF-PEO (PVDF: polyvinylidene fluoride) solid composite polymer electrolyte. The solid polymer electrolyte is made of PVDF, PEO, nanoparticles and a lithium salt and can be applied to a full solid state lithium ion battery. The method comprises the steps of ball mixing of the raw materials, melt blending extrusion and hot pressing of the extruded material.

Document CN113851709A also discloses a method for the preparation of a solid electrolyte using little or no solvent. The preparation steps include mixing a surface-modified inorganic filler with a lithium salt, granulating, freeze drying, and frozen pulverization to obtain the modified filler mixed with the salt. The mixture is then added to the PEO polymer and melt-extruded into a solid electrolyte.

Another document (CN110620265A) discloses a method for preparing a polymer solid-state lithium battery sheet through a roll-to-roll thermal lamination process. Polyethylene oxide, polycarbonate, lithium salt, isopropanol, a nano-inorganic substance, a fast ion conductor and a plasticizer are first mixed, and only subsequently fed into a screw extruder, in order to obtain a film with a thickness between 50 and 500 µm. In the final step, the electrolyte film sheet is arranged between the lithium battery positive sheet and the lithium battery negative sheet and guided into a roll-to-roll device while the electrolyte film sheet is hot so as to adhere to the negative pole sheet. Further humidification, drying, heat setting and coiling are performed in order to obtain a polymer solid-state lithium battery sheet.

CN109968622B discloses a method of preparing a lithium battery polymer electrolyte membrane by a cleaning screw extrusion. The polyvinylidene fluoride, polyethylene oxide, lithium salt, fast ion conductor, nano-inorganic filler, and plasticized plant fibers are mixed with a gas stream to form a composite compound, which are then mixed with an elastomer and fed into a twin screw extruder. The screw extruder continuously passes the mixed dispersion through a die to form a sheet, which is rolled, cooled by liquid nitrogen and annealed. A lithium battery composite polymer electrolyte membrane is obtained accordingly. The polymer composite electrolyte membrane shows good conductivity while having good mechanical properties and heat resistance, however premixing with a gas stream and other specific treatments such as an annealing and cryogenic cooling are required.

It is therefore evident from the prior art that a pre-processing of the starting materials, e.g. prior to extrusion, is consistently needed in order to obtain a separator membrane. Furthermore, many documents explicitly teach that the order of mixing the components of a polymeric electrolyte is a key aspect. Finally, a multistep sequence in a discontinuous process in combination with the above-mentioned drawbacks can greatly affect the scalability of manufacturing of polymeric electrolytes and the corresponding hybrid organic-inorganic electrolytes in industrial settings.

Ideally, a few steps manufacturing process in a continuous manner without need for pretreatment of the electrolyte components would provide a time- and resource-saving alternative to address most of the disadvantages encountered in the prior art. The development of new hybrid membranes and electrolytes obtained by a scalable solvent-free method could be considered the objective of the present invention as detailed below.

### BRIEF DESCRIPTION OF THE INVENTION

During a preliminary investigation utilizing an extrusion equipment for the manufacture of a conductive polymeric membrane, the inventors have found that the introduction of an inorganic filler powder into the extrusion equipment along with the other individual membrane components (an ion-conductive polymer and a lithium or sodium salt), which were not subjected to any pre-processing, afforded a hybrid polymeric-inorganic membrane in only two continuous steps and in a solvent free manner.

Specifically, the manufacture of the hybrid polymeric membrane rolls took place via extrusion of an ion-conductive polymer, a lithium or sodium salt and an inorganic filler independently fed into the extruder without use of solvents nor pre-mixing or other forms of processing of the membrane components prior to the extrusion. The addition of the inorganic filler to the ion-conductive polymer and lithium or sodium salt caused the efficiency and coulombic capacity values to be maintained for a longer time. Also, better results were obtained with lower thicknesses. A film thickness of about 70 microns showed better performance than the same film composition with greater thicknesses, in fact the 70 microns film was able to operate for more than 700 charge/discharge cycles in a lithium metal and a LFP cathode cell.

However, the main achievement of the present invention lies in the manufacture of hybrid polymeric membranes in a single stage and without any solvent or other time- and resource-consuming pre-treatment steps. In order to accomplish this challenging task, the hybrid polymeric membrane components were efficiently co-extruded in a twin screw extruder and then continuously subjected to calendering producing electrolyte membrane rolls with desired thickness. The process provides a more efficient manufacturing method compared to the prior art which relies on the use of solvents and/or on preliminary steps such as pre-mixing, granulating, etc. before the components can be fed into an extrusion equipment. It is noteworthy that the reported methods consider the pretreatment step necessary for an adequate processing of the starting materials, being said step even mentioned as the key challenging step. Therefore, an efficient processing method of a hybrid electrolyte membrane not involving any pretreatment step of the components was surprisingly found by the inventors. The elimination of said step has fundamental industrial relevance and may constitute a competitive advantage, since not only it entails important benefits in terms of processing time but also it reduces operational costs.

Therefore, the main aspect of the invention relates to a continuous, solvent-free extrusion and calendering process, optionally followed by rolling, of an ion-conductive polymer, an alkali salt and an inorganic filler, which are not pre-processed, to obtain a hybrid polymeric membrane.

More specifically, the invention relates to a solvent-free method for producing a hybrid polymeric membrane, said method comprises:
a) feeding into an extruder at least: (i) an ion-conductive polymer, (ii) an alkali salt and (iii) at least one inorganic filler, wherein each of said ion-conductive polymer, alkali salt and at least one inorganic filler is fed from a different inlet of the extruder to form a mixture therein, wherein said ion-conductive polymer, alkali salt and at least one inorganic filler are not pre-processed before being fed into the extruder;
b) extruding the mixture comprising said ion-conductive polymer, alkali salt and the at least one inorganic filler in the extruder to obtain an extruded mixture;
c) calendering the extruded mixture resulting from step b) to obtain a film of thickness between 15-500 µm;
d) optionally, rolling the film resulting from step c).

### BRIEF DESCRIPTION OF THE DRAWINGS

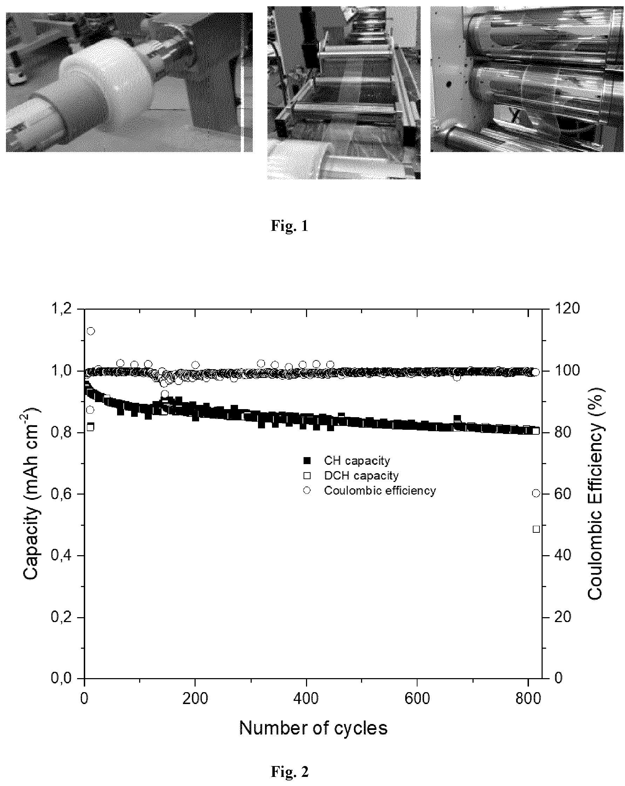

Figure 1 shows images of the equipment used in the method of the invention (left panel) and the corresponding membrane obtained by the method of the invention (middle and right panel).
Figure 2 shows the electrochemical results of one cell assembled with a lithium metal anode, a cathode (LFP, 75,9 wt%; LiTFSI, 4,6 wt%; PEO, 13,8 wt%; carbon black, 5,7 wt%) and a hybrid separator (PEO, 54,8 wt%; LiTFSI, 17,9 wt%; α-Al₂O₃; 27,3 wt%) and with a thickness of 70 microns. The graph shows the charge and discharge capacity (in mA·h/cm²) and the % coulombic efficiency. As it can be seen, more than 700 charge/discharge cycles are obtained.

### DETAILED DESCRIPTION OF THE INVENTION

The present invention relates to a solvent-free method for producing a hybrid polymeric membrane, said method comprises:
a) feeding into an extruder at least: (i) an ion-conductive polymer, (ii) an alkali salt and (iii) at least one inorganic filler, wherein each of said ion-conductive polymer, alkali salt and at least one inorganic filler is independently fed from a different inlet of the extruder to form a mixture therein,
   wherein said ion-conductive polymer, alkali salt and at least one inorganic filler are not pre-processed before being fed into the extruder;
b) extruding the mixture comprising said ion-conductive polymer, alkali salt and at least one inorganic filler in the extruder to obtain an extruded mixture;
c) calendering the extruded mixture resulting from step b) to obtain a film of thickness between 15-500 µm;
d) optionally, rolling the film resulting from step c).

### Steps a) - d)

The main feature of this solvent-free method is that the components of the hybrid polymeric membrane are not subjected to any form of pre-processing treatment before being fed independently into an extruder. The membrane components are then fed into the extruder as ready-to-use neat powders, pellets or liquids.

Several ways of pre-processing certain components, chemically or physically, are known in the art such as those mentioned above: pre-mixing, blending, (co-)dissolution in a solvent (optionally stirring for a given time), granulation, desagglorameration, bead milling, ball milling, shaker mixing and a combination thereof. While these pre-processing steps may help homogenize a mixture to be processed, they are time- and resource-consuming.

Thus, in a particular embodiment, in the solvent-free process of the invention said ion-conductive polymer, alkali salt and inorganic filler are not pre-processed before being fed into the extruder. In another embodiment, said ion-conductive polymer, alkali salt and inorganic filler are not co-processed before being fed into the extruder, meaning that they are not subjected simultaneously and in the same apparatus to a pre-processing step. In a more particular embodiment, said pre-processing step is selected from the group consisting of pre-mixing, blending, (co-)dissolution in a solvent, granulation, desagglorameration, bead milling, ball milling, shaker mixing or any combination thereof.

In another particular embodiment, the hybrid polymeric membrane components can be subjected to a purification prior to the use in the present method, such as vacuum-drying, distillation, recrystallization, sublimation, chromatography, which solely increase the purity of said components. These purification methods are not considered pre-processing steps and therefore they are not excluded in the process of the invention.

The ion-conductive polymer, alkali salt and at least one inorganic filler are each independently fed into the extruder from a different inlet. Different extruders can be used to carry out the method of the invention and a skilled person in the art would be acquainted with the available equipment. In a preferred embodiment the extruder is a twin-screw extruder.

In one embodiment, the ion-conductive polymer, alkali salt and at least one inorganic filler are fed simultaneously. Alternatively, one of the ion-conductive polymer, alkali salt and at least one inorganic filler is first fed into the extruder followed by the remainder. In another embodiment, two of the ion-conductive polymer, alkali salt and at least one inorganic filler are first fed into the extruder followed by the remainder. It has to be noted that, in contrast to the prior art, the order by which the individual components are fed into the extruder does not affect the efficiency of the process nor the electrochemical features of the obtained polymeric hybrid membrane.

Once the at least ion-conductive polymer, alkali salt and inorganic filler are fed into the extruder, the temperature inside the extruder (as measured at the outlet) should be optimal for the processing of the mixture comprising at least an ion-conductive polymer, an alkali salt and at least an inorganic filler. In one embodiment, said temperature is comprised between 50 and 250 °C. In another embodiment, said temperature is comprised between 150 and 220 °C. In a preferred embodiment said temperature is about 180 °C. However, the optimal temperature is a parameter that a skilled person would easily determine depending on the components of the mixture to be extruded.

In an embodiment, the mixture in the extruder is subjected at a certain rotational speed and total mass rate under the optimal temperature as defined above. The rotational speed and the total mass rate can also be easily determined depending on the mixture to be extruded. In an embodiment, the rotational speed is between of 50 and 100 rpm, preferably is 80 rpm. In an embodiment the total mass rate is between 1,0 and 4,0 Kg h⁻¹, preferably is 2,5 Kg h⁻¹.

In one embodiment, the solvent-free method for producing a hybrid polymeric membrane comprises:
a) feeding into an extruder an ion-conductive polymer, an alkali salt and at least one inorganic fillers, wherein each of said ion-conductive polymer, alkali salt and at least one inorganic filler is independently fed from a different inlet of the extruder to form a mixture therein, wherein said ion-conductive polymer, alkali salt and at least one inorganic filler are not pre-processed before being fed into the extruder;
b) extruding the mixture comprising said ion-conductive polymer, alkali salt and at least one inorganic filler in the extruder to obtain an extruded mixture;
c) calendering the extruded mixture resulting from step b) to obtain a film of thickness between 15-500 µm;
d) optionally, rolling the film resulting from step c).

In one embodiment, the solvent-free method for producing a hybrid polymeric membrane comprises:
a) feeding into an extruder an ion-conductive polymer, an alkali salt and an inorganic filler, wherein each of said ion-conductive polymer, alkali salt and inorganic filler is independently fed from a different inlet of the extruder to form a mixture therein, wherein said ion-conductive polymer, alkali salt and inorganic filler are not pre-processed before being fed into the extruder;
b) extruding the mixture comprising said ion-conductive polymer, alkali salt and inorganic filler in the extruder to obtain an extruded mixture;
c) calendering the extruded mixture resulting from step b) to obtain a film of thickness between 15-500 µm;
d) optionally, rolling the film resulting from step c).

The extruder is connected to a wide-slot die and the die applies a molten extruded mixture film on a chill roll.

In an embodiment, calendering of the extruded mixture resulting from step b) as defined above is performed to obtain a film of thickness between 20-500 µm.

The calendering process includes passing the extruded mixture between a pair of calendering rollers to apply a linear pressure to the extruded mixture. In this process, a uniform linear pressure is continuously applied from one end of the extruded mixture to the other end thereof. Therefore, uniform stress is applied regardless of the width and length of the extruded mixture. Thus, unlike conventional uniaxial pressing processes, processing defects such as interfacial delamination between the respective components the membrane and non-uniform packing density between positions are suppressed.

In a preferred embodiment, the thickness of the film obtained by calendering is between 50 and 100 µm. More preferably, the thickness of the film is 70 µm.

In addition, the rotational speed of the calendering rollers is preferably 0,7 times per minute or less.

The temperature of the calendering rollers is preferably 20° C to 60° C, more preferably is 20 °C, and the diameter of the calendering rollers is at least 100 mm, preferably about 150 mm. When the temperature and diameter fall within the above numerical ranges, it is possible to more effectively eliminate the superficial irregularities of the film.

Optionally, the film resulting from step c) is rolled by the winding unit integrated in the calender. Optionally, the winding unit is provided with a substrate for the optimal rolling of the film resulting from step c). A skilled person would know which substrate is suitable for the optimal rolling of the film resulting from step c), for example a polymer, such as PET (polyethylene terephthalate) and PI (polyimide), or silicone paper.

Hybrid polymeric membranes obtained by the method of the present invention are of great interest in various applications (catalysis, filtration, electrochemistry, etc.). In one embodiment, the hybrid polymeric membrane can be used as cathode for lithium or sodium solid-state batteries. However, in a preferred embodiment, the hybrid polymeric membrane is used as electrolyte or separator in said lithium or sodium batteries.

Thus, in a preferred embodiment, the hybrid polymer membrane obtained by the solvent-free process of the invention is a hybrid polymeric electrolyte. Said hybrid polymer electrolyte can be used in solid state lithium or sodium batteries.

### Conductive polymer

In step a) at least an ion-conductive polymer, an alkali salt and at least one inorganic filler are independently feed into the extruder from different inlets. Ion-conductive polymers suitable for a hybrid polymeric membrane are well-known in the art, such as those described in Aziz et al., Journal of Science: Advanced Materials and Devices, 2018, (1):1-17. The conductive polymer comprises monomeric units (or repeating units).

In the context of the present invention, by the term "ion-conductive polymer" it is understood a polymer which is capable of solvating and desolvating metal cations, allowing for conduction of said metal cations by a process of sequential solvation and desolvation under an electric field.

When the hybrid polymer membrane is used as electrolyte, the ion-conductive polymer effectively transports the metal cations from the anode to the cathode (when discharging) or from the cathode to the anode (when charging). In such a conduction mechanism, the strength of coordination between the metal cations and the coordinating units, as well as the segmental motion of the conductive polymer chains comprising the coordinating units largely determine the rate of metal cation transport across the electrolyte. Typically, the coordination process involves non-covalent interactions, preferably electrostatic interactions such as ionic interactions, and van der Waals forces, such as dipole-dipole interactions between the monomeric units and the metal cation, in particular between atoms of the monomeric units with lone electron pairs, such as on O, N, S or halide atoms, and the metal cation.

Therefore, in an embodiment, the ion-conductive polymer comprises monomeric units that are capable of solvating and desolvating metal cations, preferably alkali metal cations, such as Li, Na, K, Ca, Rb or Cs cations. These monomeric units are also herein referred to as ion-conductive monomeric units. The monomeric units are comprised in an amount sufficient to provide transport of the metal cations, for example from one electrode to the other under an electric field applied during operation of an electrochemical cell or battery.

In an embodiment, the ion-conductive polymer is selected from a polyalkylene oxide such as polyethylene oxide (PEO) and polypropylene oxide (PPO); a polyalkylenimine such as polyethyleneimine (PEI); a polyalkylene sulphide such as polyethylene sulphide (PES); a polyalkylene carbonate, such as polytrimethylenecarbonate (PTMC), polyethylenecarbonate (PEC) or polypropylenecarbonate (PPC); a polyacrylate, in particular a polyalkylacrylate or an alkyl ester thereof, such as polymethylmethacrylate (PMMA); a polyphosphazene, such as poly[bis(2-(2-methoxyethoxy)ethoxy) phosphazene (MEEP); a polysiloxane (PSi), such as poly(dimethyl siloxane) (PDMS); a polyvinyl alcohol (PVA) or polyvinyl amine (PVAm); a polyvinyl acetate (PVAc); a polyvinyl halide, such as polyvinyl chloride (PVC) or polyvinylidene difluoride (PVDF); polyvinylidene difluoride-hexafluropropylene (PVDF-HFP); polyacrylonitrile (PAN); poly(vinylpyrrolidone) (PVP); poly(2-vinylpyridine) (P2VP); polyester such as poly(ε-caprolactone) (PCL); a poly(maleimide), such as a poly(alkylenemaleimide), e.g. poly(ethylene-alt-maleimide) (PEaMI); polyaniline (PANI); chitosan (CS); a blend of a ion-conductive polymer, such as a polyalkylene oxide, a polyalkylene carbonate, a polyacrylate or a polyester with polyvinylidene fluoride (PVDF), polyvinylidene difluoride-hexafluropropylene (PVDF-HFP) or ethylene-propylene (PP/PE) copolymers; and combinations thereof.

The terms "combinations" or "blends" are used herein indistinctly and refer to a mixture of two or more components, in particular two or more polymers. Blends are obtainable by common methods known to the skilled person, such as mechanical blending, solution blending, or melt blending. In particular, solution blending comprises dispersing or dissolving the polymers in a solvent, mixing, and evaporating the solvent. Polymer blends may be miscible, when the blend exhibits a single glass transition temperature (Tg); or immiscible, when the blend exhibits the Tg of its constituent polymers. Polymer blends can be directly obtained from commercial suppliers.

In a preferred embodiment, the ion-conductive polymer is selected from a polyalkylene oxide such as polyethylene oxide (PEO) and polypropylene oxide (PPO); a polyalkylene sulphide such as polyethylene sulphide (PES); a polyalkylene carbonate, such as polytrimethylenecarbonate (PTMC), polyethylenecarbonate (PEC) or polypropylenecarbonate (PPC); a polyacrylate, in particular a polyalkylacrylate or an alkyl ester thereof, such as polymethylmethacrylate (PMMA) and combinations thereof. In a particular embodiment, blend of an ion-conductive polymer, such as a polyalkylene oxide, a polyalkylene carbonate, a polyacrylate or a polyester with polyvinylidene fluoride (PVDF), polyvinylidene difluoride-hexafluropropylene (PVDF-HFP) or ethylene-propylene (PP/PE) copolymers are preferred.

In a more preferred embodiment, the ion-conductive polymer is selected from polyethylene oxide (PEO), polypropylene oxide (PPO), polytrimethylenecarbonate (PTMC), polyethylenecarbonate (PEC), polypropylenecarbonate (PPC), polytetrahydrofurane (polyTHF), polymethylmethacrylate (PMMA), a blend of at least one of said ion-conductive polymers with polyvinylidene fluoride (PVDF), polyvinylidene difluoride-hexafluropropylene (PVDF-HFP) or ethylene-propylene (PP/PE) copolymers, and combinations thereof.

The ion-conductive polymer may have a weight average molecular weight (Mw) of from about 100.000 g/mol to about 7.000.000 g/mol. The weight average molecular weight (Mw) of the ion-conductive polymer may be, for example, from about 200.000 g/mol to about 7.000.000 g/mol, for example, from about 300.000 g/mol to about 5.000.000 g/mol. The ion-conductive polymer having the weight average molecular weight (Mw) within the ranges described above has an appropriate chain length, i.e., an appropriate degree of polymerization and thus may have enhanced ionic conductivity at room temperature. However, the weight average molecular weight (Mw) of the ion-conductive polymer is not particularly limited to the above ranges and may be within any range that enhances the ionic conductivity of the electrolyte composition or represents gains in the mechanical properties.

More preferably, the ion-conductive polymer is an ion-conductive polymer having alkylene oxide-based segment.

The phrase "ion-conductive polymer having an alkylene oxide-based segment" as used herein refers to an ion-conductive polymer having an alkylene oxide chain structural unit in which alkylene groups and ether oxygen groups are alternately arranged.

The alkylene oxide chain structural unit may be included in a main chain of the ion-conductive polymer, or may be included, in a grafted form, in the ion-conductive polymer. For example, the alkylene oxide chain structural unit may be an alkylene oxide chain structural unit having 8 to 500.000 carbon atoms, for example, 40 to 250.000 carbon atoms. In some embodiments, the alkylene oxide chain structural unit may be branched or have a comb-like structure.

The ion-conductive polymer may include a siloxane-based polymer or an acrylate-based polymer, a poly(alkene-alt-maleic anhydride) polymer to which is attached the alkylene oxide-based polymer. The ion-conductive polymer may comprise at least one selected from an alkylene oxide-based polymer blend, a siloxane-based polymer blend, and an acrylate-based polymer blend a poly(alkene-alt-maleic anhydride) polymer.

In a particular embodiment, the ion-conductive polymer may be at least one selected from polyethylene oxide (PEO), polypropylene oxide (PPO), polybutylene oxide (PBO), a PEO-PPO blend, a PEO-PBO blend, a PEO-PPO-PBO blend, a PEO-PPO block copolymer, a PEO-PBO block copolymer, a PEO-PPO-PBO block copolymer, a PBO-PEO-PBO block copolymer, a PEO-PBO-PEO block copolymer, PEO-grafted polymethyl methacrylate (PMMA), PPO-grafted PMMA, and PBO-grafted PMMA, a PEO/PPO-grafted poly(alkene-alt-maleic anhydride) polymer.

More particularly, the ion-conductive polymer may be at least one selected from PEO, PPO, a PEO/PPO-grafted poly(alkene-alt-maleic anhydride) polymer, a PEO-PPO blend, a PEO-PPO block copolymer, a PEO-PPO-PEO block copolymer and a polystyrene-PEO block polymer. In a most preferred embodiment, the ion-conductive polymer is PEO.

The PEO polymer has the following formula: 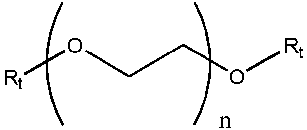 wherein n denotes the number of EO (ethylene oxide) monomeric units, which may be anywhere between 5 and 160 000; and Rₜ is H or alkyl, such as H or methyl, preferably it is H.

In an embodiment, the poly(ethylene oxide), has a weight-average molecular weight of from 300 g/mol to 10.000.000 g/mol, preferably of from 20.000 g/mol to 10.000.000 g/mol, more preferably of from 3.000.000 g/mol to 7.000.000 g/mol, and in a particular embodiment it is of about 5.000.000 g/mol, as determined by gel permeation chromatography, such as according to ISO/DIS 13885-3(en). Such polymers are commercially available, such as from Sumitomo Seika Chemicals co., ltd. (Products PEO-1 to PEO-29), ALROKO or Sigma-Aldrich (189472; CAS 25322-68-3).

It has been observed that when the molecular weight of the polyethylene oxide is low, the mechanical properties of the resulting electrode or separator are worse and affect the performance and life time, whereas with high molecular weight polymers, the mechanical properties improve although the processability gets worse due to the low flowability, requiring the addition of additives or plasticizers.

Thus, in a preferred embodiment, the ion-conductive polymer is a mixture of PEOs of different molecular weight. It has been shown that using a mixture of PEOs with different molecular weights both enables optimal processability of the components and also a hybrid polymeric membrane with better performance is obtained.

Thus, in a particular embodiment, the ion-conductive polymer is polyethylene oxide that is a mixture or blend of at least two polyethylene oxide polymers characterized by a different molecular weight as determined by GPC. In a preferred embodiment, weight-average molecular weight of one of the at least two polymers ranges from 300 g/mol to 7.000.000 g/mol, preferably from 20.000 g/mol to 7.000 000 g/mol, more preferably from 3.000.000 g/mol to 5.000.000 g/mol, and in a particular embodiment it is of about 4.000.000 g/moland the weight-average molecular weight of the other of the at least two polymers ranges from 300 g/mol to 7.000.000 g/mol, preferably of from 20.000 g/mol to 1.000.000 g/mol, more preferably of from 100.000 g/mol to 1.000.000 g/mol, and in a particular embodiment it is of about 300.000 g/mol as determined by GPC.

In an embodiment, the amount of the ion-conductive polymer or blend thereof is from 10 to 90 wt% with respect to the total weight of the hybrid polymeric membrane. In another embodiment, the weight ratio between the conductive polymer or blend thereof and the remainder components comprised in the hybrid polymeric membrane is from 10:90 to 90:10.

When the membrane to be obtained is used as electrolyte, the ion-conductive polymer can comprise auxiliary monomeric units which are not capable of coordinating the metal cations. The incorporation of such auxiliary monomeric units can serve to fine tune the physiochemical properties of the conductive polymer, such as to improve the mobility of its polymer chains, which can enhance metal cation hopping from one coordination site to the next, or the mechanical strength, which can for instance minimize puncture of the conductive polymer by any dendrites forming at its interface with the anode. In an embodiment, the auxiliary monomeric units are selected from alkylene, such as ethylene or propylene; silane; isoprene or styrene units.

In an embodiment, when the ion-conductive polymer comprises auxiliary monomeric units, these are present in an amount that does not compromise the transport of the metal cations between electrodes. In an embodiment, the amount of the auxiliary monomeric units comprised in the conductive polymer is of at most 50%, in particular at most 10% by weight with respect to the total weight of the ion-conductive polymer.

### Alkali salt

The conductivity of ion-conductive polymers, which is intrinsically low as they are primarily organic and contain only adventitious amounts of ions, may be increased by the addition of certain amounts of salts or ionic compounds.

The alkali salt in the method of the invention can be a lithium, sodium, potassium, calcium, rubidium or cesium salt.

In a preferred embodiment, the alkali salt in the method of the invention is a lithium or a sodium salt.

In a most preferred embodiment, the alkali salt is a lithium salt.

Lithium salts include organic and inorganic lithium salts.

Inorganic lithium salts include, but are not limited to, lithium perchlorate LiClO₄, lithium tetrafluoroborate LiBF₄, lithium hexafluoroarsenate LiAsF₆, lithium hexafluorophosphate LiPF₆, lithium trifluorochloroborate LiBF₃Cl, lithium iodide LiI, lithium fluoride LiF, lithium oxide Li₂O, and lithium peroxide Li₂O₂.

Organic lithium salts include, but are not limited to, lithium bis(trifluoromethanesulfonyl)imide Li[(CF₃SO₂)₂N] (also known as LiTFSI), LiN(SO₂CF₃)(SO₂CF₂H), lithium bis(fluorosulfonyl)imide Li[(FSO₂)₂N] (also known as LiFSI), lithium (trifluoromethanesulfonyl) (fluorosulfonyl) imide Li[(CF₃SO₂)(FSO₂)N] (also known as LiFTFSI), lithium bis(perfluoroethylsulfonyl)imide Li[(CF₃CF₂SO₂)₂N], Li[(C₂F₅SO₂)₂N], Li[(FSO₂)(C₄F₉SO₂)N], lithium (perfluoroethylsulfonyl)(fluorosulfonyl) imide Li[(FSO₂)(CF₃CF₂SO₂)N], lithium bis(oxalato)borate LiB(C₂O₄)₂ (also known as LiBOB), lithium oxalatodifluoroborate Li[BF₂C₂O_{4]} (also known as LiDFOB), LiC(SO₂CF₃)₃, LiPF₃(C₂F₅)₃, and lithium trifluoromethane sulfonate LiCF₃SO₃.

In a preferred embodiment, the lithium salt is an organic lithium salt selected from Li[(CF₃SO₂)₂N], LiN(SO₂CF₃)(SO₂CF₂H), Li[(FSO₂)₂N], Li[(CF₃SO₂)(FSO₂)N], LiB(C₂O₄)₂, Li[BF₂C₂O₄], LiC(SO₂CF₃)₃, LiPF₃(C₂F₅)₃, and LiCF₃SO₃.

In a preferred embodiment, the organic lithium salt is LiB(C₂O₄)₂ (LiBOB), Li[BF₂C₂O₄] (LiDFOB), Li[(FSO₂)₂N] (LiFSI), Li[(CF₃SO₂)(FSO₂)N] (LiFTFSI) or Li[(CF₃SO₂)₂N] (LiTFSI). Even more preferably, the organic lithium salt is Li[(CF₃SO₂)₂N] (LiTFSI).

Examples of suitable sodium salts which can be used in the method of the present invention include, but are not limited to, Na[R¹SO₂NSO₂R²] wherein R¹ and R² are independently selected from fluorine and a fluoroalkyl group; NaCF₃SO₃; NaC(CN)₃; NaB(C₂O₄)₂; NaBF₂(C₂O₄); NaSbF₆; NaAsF₆; sodium tetrafluoroborate NaBF₄; sodium perchlorate NaClO₄; sodium hexafluorophosphate NaPF₆; sodium bis(oxalato)borate (NaBOB), sodium-difluoro(oxalato)borate (NaDFOB), sodium trifluoromethanesulfonate (NaOTF), or a mixture thereof.

In a preferred embodiment, the sodium salt is Na[R¹SO₂NSO₂R²], wherein R¹ and R² are independently selected from F and CF₃, more preferably both are F or both are CF₃. When R¹ and R² are both F, the resulting anion is bis(fluorosulfonyl)imide anion (also referred to as "FSI anion"). When R¹ and R² are both CF₃, the resulting anion is bis(trifluoromethylsulfonyl)imide anion (also referred to as "TFSI anion"). Thus, the use of NaFSI, NaFTFSI or NaTFSI is preferred.

Examples of suitable potassium salts which can be used in the method of the present invention include, but are not limited to, potassium trifluoromethanesulfonyl imide (KTFSI), potassium bis(fluorosulfonyl)imide (KFSI), potassium perchlorate (KClO₄), potassium hexafluorophosphate (KPF₆), potassium borofluoride (KBF₄), potassium hexafluoroarsenide, potassium trifluoro-metasulfonate (KCF₃SO₃) or bis-trifluoromethyl sulfonylimide potassium (KN(CF₃SO₂)₂).

Examples of suitable rubidium and cesium salts which can be used in the method of the present invention include, but are not limited to, RbTFSI, CsTFSI, RbFSI, CsFSI, RbBCl₄, CsBCl₄, RbClO₄ or CsClO₄.

The weight ratio between the conductive polymer and the alkali salt can be an important factor in order to determine both the conductivity and the mechanic properties of the hybrid polymeric membrane. In an embodiment, the weight ratio between the ion-conductive polymer and the alkali salt ranges from 45:55 to 95:5. Preferably, the weight ratio between the ion-conductive polymer and the alkali salt ranges from 60:40 to 85:15. More preferably, the weight ratio between the ion-conductive polymer and the alkali salt is 75:25.

Alternatively, the ratio between the ion-conductive polymer and the alkali salt can also be given as molar ratio. In one embodiment, and in the particular case when polyethylene oxide is used as the ion-conductive polymer and the alkali salt is a lithium salt, the EO/Li molar ratio (EO: ethylene oxide) ranges from 10:1 to 99:1. In another embodiment, the EO/Li molar ratio ranges from 15:1 to 50:1. In a preferred embodiment, the EO/Li molar ratio is 20:1.

### Inorganic filler

Furthermore, at least one inorganic filler is used in the solvent-free method of the invention. Examples of the inorganic filler include inorganic sulfides, inorganic oxides, and inorganic nitrides. The at least one inorganic filler is preferably an inorganic oxide from the viewpoint of being stable and easy to handle when exposed to the atmosphere. The inorganic oxide may be a pulverized oxide-based inorganic solid electrolyte described later, or may be, for example, a pulverized garnet-type lithium ion conductor.

The at least one inorganic filler is selected from the group consisting of metal oxides such as SiO₂, Al₂O₃, CeO₂, TiO₂, LiAlO₂, BaTiO₃, CaTiO₃, SrTiO₃, Mg₂B₂O₅, iron oxide, lead oxide, tin oxide, calcium oxide, zinc oxide, trimanganese tetraoxide, magnesium oxide, niobium oxide, tantalum oxide, tungsten oxide, antimony oxide, indium tin oxide and zirconium oxide; zeolites, such as NaₙAlₙSi₉₆₋ₙO₁₉₂·16H₂O (0<n<27); garnets, including Li₅-phase lithium garnets, e.g., Li₅La₃M₁₂O₁₂, where M₁ is Nb, Zr, Ta, Sb, or a combination thereof; Li₆-phase lithium garnets, e.g. Li₆DLa₂M₃₂O₁₂, where D is Mg, Ca, Sr, Ba, or a combination thereof and M₃ is Nb, Ta, or a combination thereof; and Li₇-phase lithium garnets, e.g. Li₇La₃Zr₂O₁₂ and Li₇Y₃Zr₂O₁₂; perovskites, typically of formula Li₃ₓLa_{2/3x}TiO₃, such as Li_{3.3}La_{0.56}TiO₃; argyrodites, such as Li₆PS₅Cl; sulfides, such as Li₂S-P₂S₅; metal hydrides, such as Li₂B₁₂H₁₂, Li₂B₁₀H₁₀; metal halides, such as LiI; NASICON-structured materials, typically with the structure Na₁₊ₓZr₂SiₓP₃₋ₓO₁₂ or equivalents where Na, Zr and/or Si are replaced by isovalent elements, such as Na₃Zr₂(SiO₄)₂(PO₄); LISICON-structured materials, typically with the structure Li₂₊₂ₓZn₁₋ₓGeO₄, or equivalents where Zn and/or Ge are replaced by isovalent elements, such as Li₁₄Zn(GeO₄)₄; borates, such as Li₂B₄O₇; or metal phosphates, such as Li₃PO₄.

In a preferred embodiment the at least one inorganic filler is selected from the group consisting of SiO₂, Al₂O₃, CeO₂, TiO₂, LiAlO₂, ZrO₂, Mg₂B₂O₅, NaₙAlₙSi₉₆-nO₁₉₂· 16H₂O (0<n<27), Li₅La₃M₁₂O₁₂, where M₁ is Nb, Zr, Ta, Sb, or a combination thereof, Li₆DLa₂M₃₂O₁₂, where D is Mg, Ca, Sr, Ba, or a combination thereof and M₃ is Nb, Ta, or a combination thereof, Li₇La₃Zr₂O₁₂, Li₇Y₃Zr₂O₁₂, Li_{3.3}La_{0.56}TiO₃ and Li₆PS₅Cl.

In a preferred embodiment the at least one inorganic filler is selected from the group consisting of SiO₂, Al₂O₃, CeO₂, TiO₂, LiAlO₂, ZrO₂ or Mg₂B₂O₅ and zeolite NaₙAlₙSi₉₆₋ₙO₁₉₂· 16H₂O (0<n<27).

Even more preferably the inorganic filler is alumina (Al₂O₃), particularly α-alumina.

The average particle size of the at least one inorganic filler (average diameter when the inorganic filler is fibrous) is not particularly limited, and may be, for example, 0,01 µm to 8 µm, 0,1 µm to 3 µm. Preferably, the average particle size of the at least one inorganic filler is about 1 µm. The average particle size of the inorganic filler can be measured by using a known particle size distribution measuring device using a laser scattering method.

In the hybrid polymeric membrane of the present disclosure, the content of the at least one inorganic filler is preferably 0,1% by mass to 50% by mass, more preferably 1% by mass to 40% by mass, even more preferably 10% by mass to 35% by mass based on the total weight of the hybrid polymeric membrane. In a more preferred embodiment, the content of the at least one inorganic filler is about 27% by mass based on the total weight of the hybrid polymeric membrane.

Alternatively, the weight percentage of the at least one inorganic filler is preferably 0,1 wt% to 65 wt% with respect to the total weight of the hybrid polymeric membrane, more preferably 1 wt% to 50 wt%, even more preferably 10 wt% to 35 wt% based on the total weight of the hybrid polymeric membrane. In a more preferred embodiment, the content of the at least one inorganic filler is about 27 wt% based on the total weight of the hybrid polymeric membrane.

In a preferred embodiment, step a) of the solvent-free process of the invention comprises feeding into an extruder at least:
(i) an ion-conductive polymer selected from polyethylene oxide (PEO), polypropylene oxide (PPO), polyalkylene carbonates, polytetrahydrofurane (polyTHF) a blend of at least one of said ion-conductive polymers with poly vinylidene fluoride (PVDF), polyvinylidene difluoride-hexafluropropylene (PVDF-HFP) or ethylene-propylene (PE-PP) copolymers, and combinations thereof;
(ii) a lithium salt selected from Li[(CF₃SO₂)₂N], LiN(SO₂CF₃)(SO₂CF₂H), Li[(FSO₂)₂N], Li[(CF₃SO₂)(FSO₂)N], LiB(C₂O₄)₂, Li[BF₂C₂O₄], LiC(SO₂CF₃)₃, LiPF₃(C₂F₅)₃, and LiCF₃SO₃; and
(iii) at least one inorganic filler selected from SiO₂, Al₂O₃, CeO₂, TiO₂, LiAlO₂,ZrO₂ or Mg₂B₂O₅ and zeolite NaₙAlₙSi₉₆₋ₙO₁₉₂· 16H₂O (0<n<27),
wherein each of said ion-conductive polymer, lithium salt and at least one inorganic filler is fed from a different inlet of the extruder to form a mixture therein, and wherein said ion-conductive polymer, lithium salt and at least one inorganic filler are not pre-processed before being fed into the extruder.

In a more preferred embodiment,
(i) the ion-conductive polymer is selected from polyethylene oxide (PEO), polypropylene oxide (PPO), polytrimethylenecarbonate (PTMC), polyethylenecarbonate (PEC), polypropylenecarbonate (PPC), polytetrahydrofurane (polyTHF), polymethylmethacrylate (PMMA), a blend of at least one of said ion-conductive polymers with polyvinylidene fluoride (PVDF), polyvinylidene difluoride-hexafluropropylene (PVDF-HFP), or ethylene-propylene copolymers (PE-PP), and combinations thereof;
(ii) the lithium salt is selected from LiB(C₂O₄)₂, Li[BF₂C₂O₄], Li[(FSO₂)₂N], Li[(CF₃SO₂)(FSO₂)N] and Li[(CF₃SO₂)₂N]; and
(iii) the at least one inorganic filler is selected from SiO₂, Al₂O₃, CeO₂, TiO₂, LiAlO₂, ZrO₂ or Mg₂B₂O₅ and zeolite NaₙAlₙSi₉₆₋ₙO₁₉₂·16H₂O (0<n<27).

In a most preferred embodiment,
(i) the ion-conductive polymer is polyethylene oxide or a mixture of at least two polyethylene oxide polymers with different molecular weight as determined by GPC, one of the at least two polymers ranging from 2.000.000 to 6.000.000 Da and the other of the at least two polymers ranging from 100.000 to 500.000 Da as determined by GPC,
(ii) the lithium salt is Li[(CF₃SO₂)₂N]; and
(iii) the inorganic filler is α-Al₂O₃.

### Additives

The step a) of the solvent-free method of the present invention may further comprise feeding into the extruder one or more additives, such as plasticizers and antioxidants.

In an embodiment, the step a) of the solvent-free method of the present invention may further comprise feeding into the extruder a plasticizer. Plasticizers can enhance the conductivity of the hybrid polymeric membrane, ultimately lowering the operational temperature of the electrochemical cell.

In an embodiment, the plasticizer is selected from ethylene glycols or alkyl ethers thereof. The ethylene glycol is preferably an alkyl-terminated polyethylene glycol (e.g. PEGDME-200, PEGDME-400, PEGDME-600), tetraethylene glycol dimethyl ether, triethylene glycol dimethyl ether, or diglyme, more preferably it is polyethylene glycol dimethyl ether. The polyethylene glycol preferably has a weight-average molecular weight of from 300 to 19.000 g/mol as determined by gel permeation chromatography, such as according to ISO/DIS 13885-3(en).

In an embodiment, the plasticizer is an aprotic organic compound. The aprotic organic compound is preferably an aprotic ether, ester, carbonate, nitrile, sulfonamide or amide. Specific examples thereof include propylene carbonate, gamma-butyrolactone, butylene carbonate, ethylene carbonate, dimethyl carbonate, ethylmethyl carbonate, diethyl carbonate, 1,2-dimethoxyethane, 1,2-dimethoxypropane, 3-methyl-2-oxazolidone, tetrahydrofuran, 2-methyltetrahydrofuran, 1,3-dioxolane, 4-methyl-1,3-dioxolane, tert-butyl ether, isobutyl ether, 1,2-ethoxymethoxy ethane, dimethyl ether, methyl formate, methyl acetate, methyl propionate and 2-keto-4-(2,5,8,11-tetraoxadodecyl)-1,3-dioxolane (MC3), dialkyl phthalates such as dimethyl phthalate (DMP), diethyl phthalate (DEP), dibutyl phthalate (DBP) or di(ethyl-hexyl) phthalate (DEP), dimethylformamide (DMF). Two or more of the aprotic organic compounds may be used in combination.

In an embodiment, the plasticizer is an ionic liquid. Examples of suitable ionic liquids are 1-butyl-3-methylimidazolium-bis(trifluoromethanesulfonyl)imide (BMITFSI); 1-ethyl-3-methylimidazolium-bis(trifluoromethanesulfonyl)imide (EMITFSI); N-methyl-N-propylpiperidinium-bis(trifluoromethanesulfonyl)imide (PP₁₃TFSI); 1-ethyl-3-methyl imidazolium trifluoromethanesulfonate (EMITf); N-butyl-N-ethylpyrrolidinium-bis(trifluoromethanesulfonyl)imide (Pyr₂₄TFSI); 1-n-propyl-2,3-dimethylimidazolium tetrafluoroborate (MMPIBF₄); or 1-n-propyl-2,3-dimethylimidazolium hexafluorophosphate (MMPIPF₆).

In a preferred embodiment, the plasticizer is liquid at room temperature (22°C).

In an embodiment, the amount of the plasticizer in the hybrid polymeric membrane is from 0,01 to 50 weight % with respect to the total weight of the hybrid polymeric membrane.

In another embodiment, the hybrid polymeric membrane comprises no plasticizer or comprises only traces thereof, such as 0,1% by weight or less with respect to the total weight of the hybrid polymeric membrane. In another embodiment, it further comprises no organic liquid or comprises only traces thereof, such as 0,1% by weight or less with respect to the total weight of the hybrid polymeric membrane.

In another embodiment, the step a) of the solvent-free method of the present invention may further comprise feeding into the extruder an antioxidant.

In an embodiment, the antioxidant is selected from vitamins such as vitamin E, vitamin C, 2,6-di-tert-butyl-4-methylphenol, dydecyl thiopropionate (DLTP), pentaerythritol-tetra-[3-(3,5-di-tert-butyl-4-hydroxyphenyl) acrylate], antioxidant 168 and octadecane - 3-(3,5-di-tert-butyl-4-hydroxyphenyl) acrylate and combinations thereof. Preferably, the antioxidant refers to one or more combinations of vitamins.

In another embodiment, the amount of the antioxidant in the hybrid polymeric membrane is from 0,01 to 3 wt% with respect to the total weight of the hybrid polymeric membrane.

In another embodiment, the step a) of the solvent-free method of the present invention further comprises feeding into the extruder both a plasticizer and an anti-oxidant as defined above.

### Example 1. Manufacturing of a hybrid polymer electrolyte

A 70:30 mixture of 4.000.000 g/mol PEO and 300.000 g/mol PEO was purchased from ALROKO and used as a polymeric component of the hybrid polymeric electrolyte. The conducting lithium salt bis(trifluoromethane)sulfonimide (LiTFSI) was purchased from SOLVIONIC. A molar ratio of EO/Li = 20:1 was set between the PEO and lithium salt. The inorganic filler, 1 µm alpha-alumina (purchased from US-nano), was used in 27,3 wt%. The starting materials were dried under vacuum at 15 mbar for 16 h, the salt (LiTFSI) and the alpha-alumina being heated at 100 °C and the PEO polymers at 50 °C.

Due to the hygroscopic behavior of LiTFSI, the salt was introduced into a hermetic container in a dry room (dew point -60 °C at 20 °C ambient temperature). The hermetic container was placed on an inlet of a twin-screw extruder. The PEO and alpha-alumina were introduced directly into the open hoppers of the extruder. The polymer was fed from the main feeder while the inorganic filler was fed from a different inlet of the extruder.

The starting materials were not pre-mixed before prior to their introduction into the equipment and were simultaneously and proportionally fed through distinct gravimetric feeders. The three materials were mixed only once they reached the spindle of the twin-screw extruder.

The starting materials were processed inside the twin-screw extruder (ZK25E 42D, COLLIN, Germany) at 180°C, at a rotational speed of 80 rpm and with a total mass rate of 2,5 kg h⁻¹ to form a dense compound. The temperature profile on the screw extruder in different zones was in the following order: 180/180/170/160/160/150/130/100/70/40 °C.

A wide-slot die was connected to the extruder with a gap of 200 µm. The flat die applied a melted HPE film on the chill roll.

A thickness of 70 µm was obtained through a calendering step (Flat Film Line 3-Roll Chill-Roll Type CR 144/144/144-230-S, COLLIN, Germany) at a roller temperature of 20 °C and calender speed of 0,7 m min⁻¹. The smoothing gap was configured to 150 µm.

Finally, the final film is rolled by the winding unit integrated in the calender.

The final composition of the hybrid polymer electrolyte is PEO 54,8 wt%, LiTFSI 17,9 wt% and α-Al₂O₃ 27,3 wt%.

## Claims

1. A solvent-free method for producing a hybrid polymeric membrane, said method comprises:
a) feeding into an extruder at least: (i) an ion-conductive polymer, (ii) an alkali salt and (iii) at least one inorganic filler, wherein each of said ion-conductive polymer, alkali salt and at least one inorganic filler is independently fed from a different inlet of the extruder to form a mixture therein,
wherein said ion-conductive polymer, alkali salt and at least one inorganic filler are not pre-processed before being fed into the extruder;
b) extruding the mixture comprising said ion-conductive polymer, alkali salt and at least one inorganic filler in the extruder to obtain an extruded mixture;
c) calendering the extruded mixture resulting from step b) to obtain a film of thickness between 15-500 µm;
d) optionally, rolling the film resulting from step c).

2. The solvent-free method according to claim 1, wherein the ion-conductive polymer, the alkali salt and the at least one inorganic filler are not subjected to pre-mixing, blending, (co-)dissolution in a solvent, granulation, desagglorameration, bead milling, ball milling, shaker mixing or any combination thereof before being fed into the extruder.

3. The solvent-free method according to claims 1 or 2, wherein the extruder is a twin-screw extruder.

4. The solvent-free method according to any of claims 1 to 3, wherein the ion-conductive polymer is selected from the group consisting of a polyalkylene oxide; a polyalkylene sulphide; a polyalkylene carbonate; a polyacrylate; a blend of at least one of said ion-conductive polymers with polyvinylidene difluoride (PVDF), polyvinylidene difluoride-hexafluropropylene (PVDF-HFP), or ethylene-propylene (PE-PP) copolymer; and combinations thereof.

5. The solvent-free method according to any of the preceding claims, wherein the ion-conductive polymer is polyethylene oxide (PEO).

6. The solvent-free method according to claim 5, wherein the polyethylene oxide is a mixture or blend of at least two polyethylene oxide polymers with different molecular weight as determined by GPC, one of the at least two polymers ranging from 2.000.000 to 6.000.000 g/mol and the other of the at least two polymers ranging from 100.000 to 500.000 g/mol as determined by GPC.

7. The solvent-free method according to any of the preceding claims, wherein the alkali salt is a lithium salt selected from the group consisting of Li[(CF₃SO₂)₂N], LiN(SO₂CF₃)(SO₂CF₂H), Li[(FSO₂)₂N], Li[(CF₃SO₂)(FSO₂)N], LiB(C₂O₄)₂, Li[BF₂C₂O₄], LiC(SO₂CF₃)₃, LiPF₃(C₂F₅)₃, and LiCF₃SO₃.

8. The solvent-free method according to any of the preceding claims, wherein the weight ratio between the ion-conductive polymer and the alkali salt is comprised from 45:55 to 97:3.

9. The solvent-free method according to any of the preceding claims, wherein the at least one inorganic filler is SiO₂, Al₂O₃, CeO₂, TiO₂, LiAlO₂, ZrO₂ or Mg₂B₂O₅ or NanAlnSi₉₆₋ₙO₁₉₂· 16H₂O (0<n<27).

10. The solvent-free method according to any of the preceding claims, wherein the at least one inorganic filler is used in the range of 0,1% to 65 wt% with respect to the total weight of the hybrid polymeric membrane.

11. The solvent-free method according to any of the preceding claims, wherein:
- the ion-conductive polymer is selected from polyethylene oxide (PEO), polypropylene oxide (PPO), polytrimethylenecarbonate (PTMC), polyethylenecarbonate (PEC), polypropylenecarbonate (PPC), polytetrahydrofurane (polyTHF), polymethylmethacrylate (PMMA), a blend of at least one of said ion-conductive polymers with polyvinylidene fluoride (PVDF), polyvinylidene difluoride-hexafluropropylene (PVDF-HFP) or ethylene-propylene (PE-PP) copolymers , and combinations thereof;
- the alkali salt is a lithium salt selected from LiB(C₂O₄)₂, Li[BF₂C₂O₄], Li[(FSO₂)₂N], Li[(CF₃SO₂)(FSO₂)N] and Li[(CF₃SO₂)₂N]; and
- the at least one inorganic filler is selected from SiO₂, Al₂O₃, CeO₂, TiO₂, LiAlO₂, ZrO₂ or Mg₂B₂O₅ and zeolite NaₙAlₙSi₉₆₋ₙO₁₉₂·16H₂O (0<n<27).

12. The solvent-free method according to claim 11, wherein:
- the ion-conductive polymer is a polyethylene oxide which is a mixture or blend of at least two polyethylene oxide polymers with different molecular weight as determined by GPC, one of the at least two polymers ranging from 2.000.000 to 6.000.000 g/mol and the other of the at least two polymers ranging from 100.000 to 500.000 g/mol as determined by GPC,
- the lithium salt is Li[(CF₃SO₂)₂N]; and
- the inorganic filler is Al₂O₃.

13. The solvent-free method according to claim 12, wherein the polyethylene oxide/lithium salt weight ratio ranges from 45:55 to 97:3 and the Al₂O₃ wt% is comprised between 0,1-50 wt% with respect to the total weight of the ion-conductive polymer, the lithium salt and the inorganic filler.

14. The solvent-free method according to any of the preceding claims, wherein the step a) further comprises feeding into the extruder an additive.

15. The solvent-free method according to any of the preceding claims, wherein the extruding step b) takes place at a temperature comprised between 50-250 °C.

## Patentansprüche

1. Ein lösungsmittelfreies Verfahren zur Herstellung einer hybriden Polymermembran, wobei das Verfahren umfasst:
a) Zuführen in einen Extruder von mindestens: (i) einem ionenleitenden Polymer, (ii) einem Alkalisalz und (iii) mindestens einem anorganischen Füllstoff, wobei das ionenleitende Polymer, das Alkalisalz und der mindestens eine anorganische Füllstoff jeweils unabhängig voneinander über einen anderen Einlass des Extruders zugeführt werden, um darin eine Mischung zu bilden, wobei das ionenleitende Polymer, das Alkalisalz und der mindestens eine anorganische Füllstoff vor dem Zuführen in den Extruder nicht vorverarbeitet werden;
b) Extrudieren der Mischung, die das ionenleitende Polymer, das Alkalisalz und mindestens einen anorganischen Füllstoff umfasst, im Extruder, um eine extrudierte Mischung zu erhalten;
c) Kalandrieren der aus Schritt b) resultierenden extrudierten Mischung, um einen Film mit einer Dicke zwischen 15-500 µm zu erhalten;
d) optional, Walzen des aus Schritt c) resultierenden Films.

2. Das lösungsmittelfreie Verfahren gemäß Anspruch 1, wobei das ionenleitende Polymer, das Alkalisalz und der mindestens eine anorganische Füllstoff vor dem Zuführen in den Extruder keiner Vormischung, keinem Mischen, keiner (Co-)Auflösung in einem Lösungsmittel, keiner Granulierung, keiner Desagglomerierung, keinem Perlmahlen, keinem Kugelmahlen, keinem Schüttelmischen oder einer beliebigen Kombination davon unterzogen werden.

3. Das lösungsmittelfreie Verfahren gemäß Anspruch 1 oder 2, wobei der Extruder ein Doppelschneckenextruder ist.

4. Das lösungsmittelfreie Verfahren gemäß irgendeinem der Ansprüche 1 bis 3, wobei das ionenleitende Polymer ausgewählt ist aus der Gruppe bestehend aus einem Polyalkylenoxid; einem Polyalkylensulfid; einem Polyalkylencarbonat; einem Polyacrylat; einem Gemisch aus mindestens einem der genannten ionenleitenden Polymere mit Polyvinylidendifluorid (PVDF), Polyvinylidendifluorid-Hexafluorpropylen (PVDF-HFP) oder einem Ethylen-Propylen-Copolymer (PE-PP); und Kombinationen davon.

5. Das lösungsmittelfreie Verfahren gemäß irgendeinem der vorstehenden Ansprüche, wobei das ionenleitende Polymer Polyethylenoxid (PEO) ist.

6. Das lösungsmittelfreie Verfahren gemäß Anspruch 5, wobei das Polyethylenoxid eine Mischung oder ein Gemisch aus mindestens zwei Polyethylenoxid-Polymeren mit unterschiedlichem Molekulargewicht, bestimmt durch GPC, ist, wobei eines der mindestens zwei Polymere einen Bereich von 2.000.000 bis 6.000.000 g/mol und das andere der mindestens zwei Polymere einen Bereich von 100.000 bis 500.000 g/mol aufweist, bestimmt durch GPC.

7. Das lösungsmittelfreie Verfahren gemäß irgendeinem der vorstehenden Ansprüche, wobei das Alkalisalz ein Lithiumsalz ist, ausgewählt aus der Gruppe bestehend aus Li[(CF₃SO₂)₂N], LiN(SO₂CF₃)(SO₂CF₂H), Li[(FSO₂)₂N], Li[(CF₃SO₂)(FSO₂)N], LiB(C₂O₄)₂, Li[BF₂C₂O₄], LiC(SO₂CF₃)₃, LiPF₃(C₂F₅)₃ und LiCF₃SO₃.

8. Das lösungsmittelfreie Verfahren gemäß irgendeinem der vorstehenden Ansprüche, wobei das Gewichtsverhältnis zwischen dem ionenleitenden Polymer und dem Alkalisalz zwischen 45:55 und 97:3 umfasst.

9. Das lösungsmittelfreie Verfahren gemäß irgendeinem der vorstehenden Ansprüche, wobei der mindestens eine anorganische Füllstoff SiO₂, Al₂O₃, CeO₂, TiO₂, LiAlO₂, ZrO₂ oder Mg₂B₂O₅ oder NanAlnSi₉₆₋ₙO₁₉₂·16H₂O (o<n<27) ist.

10. Das lösungsmittelfreie Verfahren gemäß irgendeinem der vorstehenden Ansprüche, wobei der mindestens eine anorganische Füllstoff im Bereich von 0,1 Gew.-% bis 65 Gew.-%, bezogen auf das Gesamtgewicht der hybriden Polymermembran, verwendet wird.

11. Das lösungsmittelfreie Verfahren gemäß irgendeinem der vorstehenden Ansprüche, wobei:
- das ionenleitende Polymer ausgewählt ist aus Polyethylenoxid (PEO), Polypropylenoxid (PPO), Polytrimethylencarbonat (PTMC), Polyethylencarbonat (PEC), Polypropylencarbonat (PPC), Polytetrahydrofuran (PolyTHF), Polymethylmethacrylat (PMMA), einem Gemisch aus mindestens einem der genannten ionenleitenden Polymere mit Polyvinylidenfluorid (PVDF), Polyvinylidendifluorid-Hexafluorpropylen (PVDF-HFP) oder Ethylen-Propylen (PE-PP)-Copolymeren sowie Kombinationen davon;
- das Alkalisalz ein Lithiumsalz ist, ausgewählt aus LiB(C₂O₄)₂, Li[BF₂C₂O₄], Li[(FSO₂)₂N], Li[(CF₃SO₂)(FSO₂)N] und Li[(CF₃SO₂)₂N]; und
- der mindestens eine anorganische Füllstoff ausgewählt ist aus SiO₂, Al₂O₃, CeO₂, TiO₂, LiAlO₂, ZrO₂ oder Mg₂B₂O₅ und Zeolith NaₙAlₙSi₉₆₋ₙO₁₉₂·16H₂O (o<n<27).

12. Das lösungsmittelfreie Verfahren gemäß Anspruch 11, wobei:
- das ionenleitende Polymer ein Polyethylenoxid ist, das eine Mischung oder ein Gemisch aus mindestens zwei Polyethylenoxid-Polymeren mit unterschiedlichem Molekulargewicht, bestimmt durch GPC, ist, wobei eines der mindestens zwei Polymere einen Bereich von 2.000.000 bis 6.000.000 g/mol und das andere der mindestens zwei Polymere einen Bereich von 100.000 bis 500.000 g/mol aufweist, bestimmt durch GPC,
- das Lithiumsalz Li[(CF₃SO₂)₂N] ist; und
- der anorganische Füllstoff Al₂O₃ ist.

13. Das lösungsmittelfreie Verfahren gemäß Anspruch 12, wobei das Gewichtsverhältnis von Polyethylenoxid zu Lithiumsalz im Bereich von 45:55 bis 97:3 liegt und der Al₂O₃-Gewichtsanteil zwischen 0,1-50 Gew.-% bezogen auf das Gesamtgewicht des ionenleitenden Polymers, des Lithiumsalzes und des anorganischen Füllstoffs umfasst.

14. Das lösungsmittelfreie Verfahren gemäß irgendeinem der vorstehenden Ansprüche, wobei der Schritt a) ferner das Zuführen eines Additivs in den Extruder umfasst.

15. Das lösungsmittelfreie Verfahren gemäß irgendeinem der vorstehenden Ansprüche, wobei der Extrusionsschritt b) bei einer Temperatur zwischen 50-250 °C stattfindet.

## Revendications

1. Un procédé sans solvant pour fabriquer une membrane polymère hybride, ledit procédé comprend :
a) l'introduction dans une extrudeuse d'au moins : (i) un polymère conducteur d'ions, (ii) un sel alcalin et (iii) au moins une charge inorganique, dans lequel chacun desdits polymère conducteur d'ions, sel alcalin et au moins une charge inorganique est introduit indépendamment par une entrée différente de l'extrudeuse pour former un mélange à l'intérieur de celle-ci,
dans lequel ledit polymère conducteur d'ions, ledit sel alcalin et ladite au moins une charge inorganique ne sont pas prétraités avant d'être introduits dans l'extrudeuse ;
b) l'extrusion du mélange comprenant ledit polymère conducteur d'ions, ledit sel alcalin et ladite au moins une charge inorganique dans l'extrudeuse pour obtenir un mélange extrudé ;
c) le calandrage du mélange extrudé résultant de l'étape b) pour obtenir un film d'une épaisseur comprise entre 15-500 µm ;
d) éventuellement, l'enroulement du film résultant de l'étape c).

2. Le procédé sans solvant selon la revendication 1, dans lequel le polymère conducteur d'ions, le sel alcalin et la au moins une charge inorganique ne sont pas soumis à un prémélange, un assemblage, une (co-)dissolution dans un solvant, une granulation, une désagglomération, un broyage à billes, un broyage à boulets, un mélange par agitation ou toute combinaison de ceux-ci avant d'être introduits dans l'extrudeuse.

3. Le procédé sans solvant selon l'une des revendications 1 ou 2, dans lequel l'extrudeuse est une extrudeuse à double vis.

4. Le procédé sans solvant selon l'une quelconque des revendications 1 à 3, dans lequel le polymère conducteur d'ions est choisi dans le groupe constitué d'un oxyde de polyalkylène ; d'un sulfure de polyalkylène ; d'un carbonate de polyalkylène ; d'un polyacrylate; d'un assemblage d'au moins l'un desdits polymères conducteurs d'ions avec du difluorure de polyvinylidène (PVDF), du difluorure de polyvinylidène-hexafluoropropylène (PVDF-HFP) ou un copolymère d'éthylène-propylène (PE-PP); et des combinaisons de ceux-ci.

5. Le procédé sans solvant selon l'une quelconque des revendications précédentes, dans lequel le polymère conducteur d'ions est l'oxyde de polyéthylène (PEO).

6. Le procédé sans solvant selon la revendication 5, dans lequel l'oxyde de polyéthylène est un mélange ou un assemblage d'au moins deux polymères d'oxyde de polyéthylène avec des masses moléculaires différentes, telles que déterminées par GPC, l'un desdits au moins deux polymères ayant un poids moléculaire compris entre 2 000 000 et 6 000 000 g/mol et l'autre desdits au moins deux polymères ayant un poids moléculaire compris entre 100 000 et 500 000 g/mol, tel que déterminé par GPC.

7. Le procédé sans solvant selon l'une quelconque des revendications précédentes, dans lequel le sel alcalin est un sel de lithium choisi dans le groupe constitué par Li[(CF₃SO₂)₂N], LiN(SO₂CF₃)(SO₂CF₂H), Li[(FSO₂)₂N], Li[(CF₃SO₂)(FSO₂)N], LiB(C₂O₄)₂, LiI[BF₂C₂O₄], LiC(SO₂CF₃)₃, LiPF₃(C₂F₅)₃ et LiCF₃SO3.

8. Le procédé sans solvant selon l'une quelconque des revendications précédentes, dans lequel le rapport pondéral entre le polymère conducteur d'ions et le sel alcalin est compris entre 45:55 et 97:3.

9. Le procédé sans solvant selon l'une quelconque des revendications précédentes, dans lequel la au moins une charge inorganique est SiO₂, Al₂O₃, CeO₂, TiO₂, LiAlO₂, ZrO₂ ou Mg₂B₂O₅ ou NanAlnSi₉₆₋ₙO₁₉₂·16H₂O (0<n<27).

10. Le procédé sans solvant selon l'une quelconque des revendications précédentes, dans lequel la au moins une charge inorganique est utilisée dans la plage de 0,1 % à 65 % en poids par rapport au poids total de la membrane polymère hybride.

11. Le procédé sans solvant selon l'une quelconque des revendications précédentes, dans lequel :
- le polymère conducteur d'ions est choisi parmi l'oxyde de polyéthylène (PEO), l'oxyde de polypropylène (PPO), le polytriméthylène carbonate (PTMC), le polyéthylène carbonate (PEC), le polypropylène carbonate (PPC), le polytétrahydrofurane (polyTHF), le polyméthacrylate de méthyle (PMMA), un assemblage d'au moins l'un desdits polymères conducteurs d'ions avec du polyfluorure de vinylidène (PVDF), du difluorure de polyvinylidène-hexafluoropropylène (PVDF-HFP) ou un copolymère d'éthylène-propylène (PE-PP); et des combinaisons de ceux-ci ;
- le sel alcalin est un sel de lithium choisi parmi LiB(C₂O₄)₂, Li[BF₂C₂O₄], Li[(FSO₂)₂N], Li[(CF₃SO₂)(FSO₂)N] et Li[(CF₃SO₂)₂N] ; et
- la au moins une charge inorganique est choisie parmi SiO₂, Al₂O₃, CeO₂, TiO₂, LiAlO₂, ZrO₂ ou M9₂B₂O₅ et la zéolite NaₙAlₙSi₉₆₋ₙO₁₉₂·16H₂O (0<n<27).

12. Le procédé sans solvant selon la revendication 11, dans lequel :
- le polymère conducteur d'ions est un oxyde de polyéthylène qui est un mélange ou un assemblage d'au moins deux polymères d'oxyde de polyéthylène avec des masses moléculaires différentes, telles que déterminées par GPC, l'un desdits au moins deux polymères ayant un poids moléculaire compris entre 2 000 000 et 6 000 000 g/mol et l'autre desdits au moins deux polymères ayant un poids moléculaire compris entre 100 000 et 500 000 g/mol, tel que déterminé par GPC,
- le sel de lithium est Li[(CF₃SO₂)₂N] ; et
- la charge inorganique est Al₂O₃.

13. Le procédé sans solvant selon la revendication 12, dans lequel le rapport pondéral oxyde de polyéthylène/sel de lithium est compris entre 45:55 et 97:3 et le pourcentage en poids d'Al₂O₃ est compris entre 0,1-50 % en poids par rapport au poids total du polymère conducteur d'ions, du sel de lithium et de la charge inorganique.

14. Le procédé sans solvant selon l'une quelconque des revendications précédentes, dans lequel l'étape a) comprend en outre l'introduction d'un additif dans l'extrudeuse.

15. Le procédé sans solvant selon l'une quelconque des revendications précédentes, dans lequel l'étape d'extrusion b) a lieu à une température comprise entre 50-250 °C.
